Europäisches Patentamt

European Patent Office

Office européen des brevets

(11) Publication number: 0 522 454 A1

# EUROPEAN PATENT APPLICATION

(21) Application number: 92111262.9

(51) Int. Cl.⁵: C09D 7/00

(22) Date of filing: 03.07.92

(30) Priority: 05.07.91 JP 165930/91
03.09.91 JP 223177/91

(43) Date of publication of application:
13.01.93 Bulletin 93/02

(84) Designated Contracting States:
DE GB

(71) Applicant: Nippon Paint Co., Ltd.
1-2 Oyodokita 2-chome
Kita-ku, Osaka-shi, Osaka 531(JP)

(72) Inventor: Ishihara, Hajime
8-19-506, Shinnakajocho
Ibaraki-shi, Osaka 567(JP)
Inventor: Hamada, Takahiko
A-115, Kopu Nomura, 2-1-1, Imaikecho
Anjo-shi, Aichi 446(JP)

Inventor: Mizuguchi, Katsumi
A201, Tiffany Tamagushi, 2-26-2, Tamagushi
Ibaraki-shi, Osaka 567(JP)
Inventor: Yamoto, Shuhei
2-B, Mansion Shoyo No. 2, 10-13, Shojicho
Kadoma-shi, Osaka 571(JP)
Inventor: Asano, Hirokatsu
13-25, Minamiminohara 2-chome
Ibaraki-shi, Osaka 567(JP)
Inventor: Terada, Sadao
Nishi 1-304, 243-21, Oaza-Uchiage
Neyagawa-shi, Osaka 572(JP)

(74) Representative: Glawe, Delfs, Moll & Partner
Patentanwälte
Postfach 26 01 62
W-8000 München 26(DE)

(54) Method for flatting paint coating, coating and articles therefrom.

(57) A top coat paint film having a transparent feeling and being flatted is prepared and thereby, a coated article having novel design performance is obtained. A coating is flatted while keeping transparence, by adding 10 to 150 parts by weight of resin beads to 100 parts by weight of a film-forming ingredient capable of making a clear layer, wherein the resin beads consist of particles having particle diameters in a range of 11 to 70 $\mu$m and, their refractive index $n_2$ with the refractive index $n_1$ of a clear layer made by the film-forming ingredient is satisfactory for a relation expressed by the following equation ①:

$$0 \leq |n_1 - n_2| \leq 0.05 \quad ①$$

Fig. 1

BACKGROUND OF THE INVENTION

The present invention relates to a method for flatting paint coating and, furthermore, to a flat paint (hereinafter, the terms "flat or flatting" used herein are employed to mean a wide range of flatting, of which grade is from "semi gloss" to "dead matt" via "flat gloss") and articles to which this sort of coatings have been applied.

In hitherto-known flat paints, there has been employed a coating containing a flatting agent such as aluminum stearate, fine powder silica, polyethylene fine particles of low or medium molecular weight or the like and containing a film-forming element such as clear or the like.

The flat paint is applied to interior and exterior decoration of automobile parts as a part of two tone type coating or as a stripe type coating and so forth, or to electric refrigerator doors, bodies of optical instruments such as cameras or the like, furniture and so forth, in order to make a flat paint film.

In flat paint films of this type, design performance of matt has been afforded by composition consisting of a pigment, a resin and an ingredient of large oil absorption such as an extender, kieselguhr, aluminum stearate, fine powder silica or the like.

On the other side, usually in the metallic coating, clear is coated on the metallic coating which has already been coated. The clear film is rich in the surface gloss, so that it affords the design performance to metallic coat articles, matching well with brilliance of the metallic pigment contained in the lower layer.

Since there exists a trend demanding a high order of design performance in the recent automobile industry field, various devices have been proposed. The present inventors carried out intensive research on the paint films, which display design performance novel and quite different from that of the common metallic coating.

As a result, it was considered not to provide a simple clear film on a paint film surface, but to arrange a top coat film having a transparent feeling and flatted gloss. If such a top coat film is provided as, for example, a top coat of metallic coating, brilliance due to the metallic paint film emerges from the inside of the flatted surface and, there is obtained a coated article having a design performance of no previous example.

Since hitherto-known flat paint films are cloudy and opaque, they show dull white ( cloudy white ) surface color in comparison with the color of conventional clear. Since the flatting agents used for hitherto-known flat paints have hiding power, the clear film becomes cloudy and opaque. As a result, the use of flatting agents is limited to a dull white hue and, if the film thickness becomes ununiform even a little, flashing occurs and appearance is very damaged. That is, the above-mentioned novel design performance can not be displayed by the hitherto-known flatting agents.

In order to flat the gloss of paint films, although a process which comprise hurting mechanically the paint film surface has been considered, a paint film flatted by this process has large uneven irregularities, so that it is no more transparent.

SUMMARY OF THE INVENTION

It is a first object of this invention to provide a method for flatting a coating, which is capable of making a top coat film having a transparent feeling and being flatted in the gloss and thereby, capable of affording a novel design performance to a coated article.

Further, it is a second object of this invention to provide a coating, which is capable of making a top coat film having a transparent feeling and being flatted in the gloss and thereby, capable of affording a novel design performance to a coated article.

Still further, it is a third object of this invention to provide a gloss-flatted, coated article having a novel design performance of no previous example, by comprising an uppermost layer of a paint film having a transparent feeling and being flatted.

The present inventors got the following knowledge as a results of the research. A clear film comprising resin beads having a refractive index near the refractive index of the clear paint film is transparent. When the clear comprising the resin beads is coated on a base paint film ( a solid color, metallic color, pearl mica color and so forth ), a color of the lowlying base paint film can be seen through the clear film comprising resin beads. Furthermore, the surface of the clear film comprising resin beads has uneven irregularities which cause diffused reflection of light, so that an effect of flatting a gloss appears. That is, hither to-known flat films show only a dull white surface color, while the present type clear film comprising resin beads has a flatted gloss compared with simple clear films and, because the clear film shows light transmission, a transmitted color is seen.

Based on these knowledge, the present inventors completed this invention.

To solve the above first object, the present invention provides a method for flatting a coating, comprising:

adding 10 to 150 parts by weight of resin beads against 100 parts by weight of a film-forming ingredient capable of making a clear layer,

wherein the resin beads consist of particles having particle diameters in a range of from 11 to 70 $\mu$m and, their refractive index $n_2$ is satisfactory for the relation expressed by the following equation ① together with the refractive index $n_1$ of the clear layer made by the film-forming ingredient.

$$0 \leq | n_1 - R_2 | \leq 0.05 \qquad ①$$

To solve the second object, the present invention provide a coating made by adding 10 to 150 parts by weight of resin beads against 100 parts by weight of a film-forming ingredient capable of making a clear layer,

wherein the resin beads consist of particles having particle diameters in a range of from 11 to 70 $\mu$m and, their refractive index $n_2$ is satisfactory for the relation expressed by the above equation ① together with the refractive index $n_1$ of the clear layer made by the film-forming ingredient.

To solve the third object, the present invention provides a coated article, wherein the uppermost layer of a paint film formed on an article to be coated is a clear layer having uneven irregularities on the surface because the uppermost layer comprises resin beads consisting of particles having diameters in a range of from 11 to 70 $\mu$m, and the refractive index $n_1$ of the clear layer is satisfactory for the relation expressed by the above equation ① together with the refractive index $n_2$ of the resin beads.

A preferable vehicle in this invention is such as capable of making a transparent paint film, but it is not especially limited.

It is required that resin beads added to the vehicle in this invention consist of particles having diameters in a range of from 11 to 70 $\mu$m. If the resin beads contain particles of 11 $\mu$m or less in diameter, the flatting effect is inferior. If the resin beads contain particles of 70 $\mu$m or more in diameter, the film becomes sandy and the film outside appearance becomes bad. However, due to scattering in a manufacture process, there may be contained a slight amount of particles having their diameters in a range of from 1 $\mu$m up to 11 $\mu$m or in a range of more than 70 $\mu$m to 100 $\mu$m or less ( for example, a 0.1 to 5.0 % amount by weight may be contained per 100 % by weight of the total resin beads ).

As far as the resin beads are fine particles of a resin having a refractive index $n_2$ so that the absolute value of difference between $n_2$ and the refractive index $n_1$ of the clear layer is in a range of from 0 to 0.05, the resin beads are not especially limited. If the absolute value of difference between the refractive index $n_2$ of the particles and the refractive index $n_1$ of the clear layer is out of the range, there is a problem that the clear film becomes dull white.

In this invention, the refractive index $n_1$ of the clear layer is a relative refractive index measured as a free film by an Abbe refractometer. The refractive index $n_2$ of the resin beads is a relative refractive index obtained by measuring a difference by a differential refractometer between the refractive index of a solution ( or a solvent ), of which refractive index is already known, and the refractive index of a solution prepared by dispersing particles in the index-known solution.

Preferable resin beads are, for example, acrylic-based crosslinked particles, styrene-based crosslinked particles and so forth. The resin beads are obtained, for example, by a polymerization method known in public for obtaining resin particles, such as suspension polymerization, seed polymerization, multi-step seed polymerization and so forth which are carried out between a monofunctional monomer ( a ) and a di- or polyfunctional monomer ( b ).

A preferable monofuntional monomer ( a ) is, for example, a monomer comprising a carboxylic group, monomer comprising a hydroxyl group, an alkyl ( meth )acrylate comprising a nitrogen atom ( or a monomer comprising an amino group ), a polymerizable amide ( or a monomer comprising an amide group ), polymerizable nitrile, polymerizable aromatic compound, an $\alpha$-olefin, a vinyl ester, diene, halogenated vinyl compound, polymerizable ketone and the like. Examples of the monomer comprising a carboxylic group are acrylic acid, methacrylic acid, crotonic acid, itaconic acid, maleic acid, fumaric acid and the like. Examples of the monomer comprising a hydroxyl group are 2-hydroxyethyl acrylate, hydroxypropyl acrylate, 2-hydroxyethyl methacrylate, hydroxypropyl methacrylate, hydroxybutyl acrylate, hydroxybutyl methacrylate, allyl alcohol, methallyl alcohol and the like. Examples of the alkyl ( meth )acrylate comprising a nitrogen atom ( or the monomer comprising an amino group ) are dimethylaminoethyl acrylate, dimethylaminoethyl methacrylate and the like. Those of the polymerizable amide ( or the monomer comprising an amide group ) are acrylamide, methacrylamide, N-methylol-acrylamide, N-methoxymethyl-acrylamide and the like. Examples of the polymerizable nitrile are acrylonitrile, methacrylonitrile and the like. Examples of the alkyl ( meth ) acrylate are methyl acrylate, methyl methacrylate, ethyl acrylate, ethyl methacrylate, n-butyl acrylate, n-butyl methacrylate, isobutyl acrylate, 2-ethylhexyl acrylate, lauryl methacrylate, phenyl acrylate and the like. Examples of the polymerizable aromatic compound are styrene, $\alpha$-methylstyrene, vinyltoluene, t-butylstyrene, vinylnaphthalene and the like. Examples of the $\alpha$-olefin are ethylene, propylene and the like. Examples of the vinyl ester are vinyl acetate, vinyl propionate and the like. Examples of the diene are butadiene, isoprene and the like. Examples of the halogenated vinyl compound are 4-chlorostyrene, vinyl chloride, vinyl bromide, vinyl fluoride and the like. Examples of the polymerizable ketone are vinylketone and the like. These compounds may be used alone or in combination of two or more kinds.

A preferable polyfunctional monomer ( b ) is, for example, a monomer comprising two or more of an $\alpha$, $\beta$-unsaturated group such as a polymerizable unsaturated carboxylic acid ester of a polyvalent alcohol, a polymerizable unsaturated alcohol ester of a polybasic acid, an aromatic compound substituted with two or more vinyl groups and the like. Their practical examples are ethylene glycol diacrylate, ethylene glycol dimethacrylate, triethylene glycol dimethacrylate, tetraethylene glycol dimethacrylate, 1,3-butylene glycol dimethacrylate, trimethylolpropane triacrylate, trimethylolpropane trimethacrylate, 1,4-butanediol diacrylate, neopentyl glycol diacrylate, 1,6-hexanediol diacrylate, 1,6-hexanediol dimethacrylate, pentaerythritol diacrylate, pentaerythritol triacrylate, pentaerythritol tetraacrylate, pentaerythritol dimethacrylate, pentaerythritol trimethacrylate, pentaerythritol tetramethacrylate, glycerol dimethacrylate, glycerol diacrylate, glycerol acroxy dimethacrylate, 1,1,1- tris( hydroxymethyl )ethane diacrylate, 1,1,1- tris( hydroxymethyl )ethane triacrylate, 1,1,1- tris( hydroxymethyl )ethane dimethacrylate, 1,1,1-tris( hydroxymethyl )ethane trimethacrylate, 1,1,1- tris( hydroxymethyl )propane diacrylate, 1,1,1- tris( hydroxymethyl )propane triacrylate, 1,1,1- tris( hydroxymethyl )propane dimethacrylate, 1,1,1- tris( hydroxymethyl )propane trimethacrylate, triallyl cyanurate, triallyl isocyanurate, triallyl trimellitate, diallyl terephthalate, dially phthalate, divinylbenzene and the like. These compounds may be used alone or in combination of two or more kinds.

A preferable polymerization initiator used for preparing the resin beads is a peroxide or an azo compound, which are used for usual polymerization reactions. Practical examples are an oily peroxide such as benzoyl peroxide, p-chlorobenzoyl peroxide, lauroyl peroxide, t-butyl perbenzoate and the like; a water-soluble peroxide such as potassium persulfate, ammonium persulfate and the like; an oily azo compounds such as azobis( isobutyronitrile ), 2,2'-azobis( 2-methylbutyronitrile ), 2,2'-azobis( 2,4-dimethylvaleronitrile ) and the like; and a water-soluble azo compound such as 4,4'-azobis( 4-cyanovaleric acid ), 2,2'-azobis( 2-methylpropionamidine ) and the like. These compounds may be used alone or in combination of two or more kinds.

A film-forming ingredient ( clear ) capable of making a clear layer is, for example, the top clear and so forth employed in the two coat - one bake method, that is for the metallic coating finish of automobiles and the like. Preferable resins for the film-forming ingredient are polymers employed in the coating field such as an acrylic resin, alkyd resin, a polyester resin, polyurethane resin, an amino resin and the like, and they are not especially limited. Solvents to dissolve or disperse the polymers are also used for coating. They are, for example, toluene, xylene, butyl acetate, methyl acetate, methyl isobutyl ketone, butyl alcohol, an aliphatic hydrocarbon and the like, and not especially limited. Although aluminum foil or mica foil is commonly used as a flake pigment, a flake pigment having a brilliant feeling is also used and its examples are stainless, tin, a phthalocyanine flake, a sheet type of iron oxide, metal-plated glass flake, graphite, gold flake, silver flake and so forth. Similarly to the case of a metallic coating composition, a coloring pigment and various coating additive may be contained in case of necessity as additional ingredients. An appropriate example of this ingredient is such as prepared, so as to have a refractive index of 1.50 and to make a colorless transparent film, by combining acrylic type resin varnish and a solvent such as methylolmelamine, xylene, Solvesso 100 ( a trade name of petroleum naphtha, made by Exxon Chemicals Co., Ltd. ) and the like with a benzotriazole type ultraviolet radiation absorbent and so forth.

It is required that the resin beads are contained in a proportion of 10 to 150 parts by weight against 100 parts by weight of a film-forming ingredient capable of making a clear layer, and preferably, it is contained in a proportion of 40 to 120 parts by weight. In a case where the added proportion of resin beads is less than 10 parts by weight, it is hard to obtain a flat paint film compared with a case of no addition. In a case where the proportion exceeds 150 parts by weight, the resin loses the continuity and physical properties of the paint film diminishes.

The coating of this invention is coated, for example, by applying at first a metallic base coating in a two coat-one bake method, which is employed for a metallic coating finish of automobiles etc., followed by coating thereon by the wet-on-wet.

An article to be coated is, for example, an automobile, a household electronic appliance, furniture and so forth, but it is not limited to these. Especially preferable is an article having a curved surface.

Under a paint film of this invention is formed, for example, a metallic paint film which contains a flake pigment having a brilliant feeling such as an aluminum flake, mica, a phthalocyanine flake, stainless flake, tin flake, sheet type of iron oxide ( M.I.O. : Micaceous Iron Oxide ), metal-plated glass flake, graphite, gold flake, silver flake and so forth; a pearl mica paint film which contains a flake pigment having a pearl type of gloss such as titan-coating mica, iron oxide-coating mica, coloring pigment-coating mica and so forth; a paint film ( a base paint film ) such as enamel containing a usual coloring pigment and so forth. The base paint film may contain either one or both of an organic pigment and inorganic pigment.

The thickness of a clear layer of the paint film by this invention is in a range of, for example, 25 to 35 μm.

The coating of this invention, if necessary, may contain, in addition to the film-forming ingredient capable of making a clear layer and the essential ingredients of the resin beads, either one or two or more of an ingredient such as being combined with an usual coating that is, for example, a dye and transparent pigment; a surface conditioner such as a silicone oil, polymeric acrylic compound and the like; an ultraviolet irradiation absorbent; oxidation inhibitor; a precipitation-preventive agent such as a polyethylene wax, a polyamide wax, a polymeric amide and the like. The combining amount of these ingredients is not especially limited, but it is settled in a range of from 0 to 10 parts by weight against 100 parts by weight of a film-forming ingredient capable of making a clear layer. Also, a solvent used for coatings is not especially limited and all kinds of solvents for general coatings can be used.

In a case where a coating of this invention is used for making a film such as an exterior paint film of automobiles which requires film performance such as weather resistance and shock resistance, it is preferable that the following is contained as the resin beads and film-forming ingredients.

It is preferable that the resin beads used for exterior coating have the particle diameter and refractive index in the above-described range and contain the ultraviolet irradiation absorbent. The content of this absorbent is not especially limited, but it may be in a proportion of 0.5 to 3.0 parts by weight to 100 parts by weight of a resin forming the resin beads. If the absorbent content in resin beads is lower than the range, sufficient weather resistance may not be obtained and, if it exceeds the range, the resin beads may not be produced under a stable condition.

Preferable resin beads have a functional group capable of reacting with a film-forming ingredient. The content of a functional group of this type is not especially limited, but its preferable proportion is in a range of 0.018 to 3.5 mmol per cc and a further preferable proportion is in a range of 0.077 to 2.3 mmol per cc. If the proportion of a functional group reactive with a film-forming ingredient is lower than the forementioned range, sufficient shock resistance may not be obtained and, if it exceeds the range, the film performance may lower.

The film-forming ingredient is at least either one of a resin for making a film and a curing agent used in case of necessity. The ingredient contains the forementioned resin for making a film in a proportion of 25 to 100 % by weight. The functional group reactive with the film-forming ingredient is, for example, at least one kind selected from a hydroxyl group ( OH group ), an amino group ( which has one or more of a hydrogen atom bonding with a nitrogen atom ) and an amido group ( -NHCO- ), but it is not limited to these groups.

The resin beads having a functional group reactive with the film-forming ingredient may be obtained by any kind of method, however, preferable methods are such as performing a polymerization reaction by using a monomer having the functional group and such as affording the functional group by producing the resin beads followed by surface-treating, etc.

A preferable method for producing the resin beads is, for example, such as obtaining crosslinked acrylic resin particles by copolymerising a monomer ( a - 1 ), which is among the monofunctional monomer ( a ) and has the above-described functional group, with a polyfunctional group ( b ) and, if required, also with a monomer ( a - 2 ) which is among the monofunctional group ( a ) and has not the above-described functional group. In this case, copolymerization ratios of the monomers are, for example, in the range of 1 to 30 parts by weight for ( a - 1 ), 5 to 50 parts by weight for ( b ), and 20 to 94 parts by weight for ( a - 2 ) [ the total of ( a - 1 ), ( b ) and ( a - 2 ) is 100 parts by weight ] . If the ratios deviate from the range, the coating and film performance are low.

From a viewpoint of preventing swelling of resin beads and keeping stability of coating, it is preferred that the resin beads consist of a crosslinked resin and their crosslinked degree is 0.25 mmol per cc or more.

The resin beads consisting of a crosslinked resin can be made, for example, by a common production method of crosslinked resin beads.

A preferable film-forming ingredient used for coating of exterior decoration contains an ultraviolet radiation absorbent, and a preferable content of this ultraviolet radiation absorbent is in a range of 0.5 to 3.0 parts by weight to 100 parts by weight of the film-forming ingredient. The clear used for usual coating of automobile exterior decoration contains an ultraviolet radiation absorbent in this content range. If the absorbent content is lower than the range, sufficient weather resistance may not be obtained and, if it exceeds the range, film hardness may diminish.

General examples of preferable clear for exterior decoration of automobiles are a solvent type coating such as a coating made by combining an acrylic resin with an alkoxy methylol melamine resin ( which includes a coating of a high nonvolatile portion type ), a coating made by combining an acrylic resin with an isocyanate compound or a block isocyanate compound, and a coating made by combining an acrylic resin with an acid anhydride or a glycidyl compound; a water-soluble type such as a coating made by combining an acrylic resin with alkoxymethylolmelamine and emulsified in water; and the like. A practical example is a coating containing 60 to 80 % by weight of an acrylic resin and 20 to 40 % by weight of a curing agent, the former of which has a weight average molecular weight in a range of 8,000 to 25,000, a hydroxyl group value in a range of 6 to 100 mg-KOH per gram, and a carboxyl group value ( an acid value ) in a range of 5 to 20 mg-KOH per gram, and the total of the acrylic resin and curing agent is 100 % by weight. A preferable curing agent used here is at least one kind of alkoxymethylolmelamine [ which is an alcohol-modified methylolmelamine ( conversion into an alkoxyether ) ] and the like. Commercially available alkoxymethylolmelamines are, for example, "Cymel 303" ( a methylated melamine resin ) and "Uvan 128" ( a n-butylated melamine resin ), which are trade names of Mitsui Toatsu Chemicals Inc.; "SUPER BECKAMINE G821" ( an isobutylated melamine resin ), which is a trade name of Dai-Nippon Ink and Chemicals, Inc.; "NIKALACK MX-40" ( a methylated and butylated melamine resin ), which is a trade name of Sanwa Chemical Co., Ltd.; however, they are not limited to these commercial products.

If the weight average molecular weight of the acrylic resin is lower than the forementioned range, weather resistance becomes low and thus, cracking may occur. If it exceeds the range, the coating film skin becomes rough for lack of pulverizing in the course of polymerization ( conversion into fine particles ) and sufficient smoothness may not be obtained. If the hydroxyl group value or the carboxyl group value is smaller than the forementioned range, a reaction with the curing agent is not enough and the film hardness may be lacking and, if larger than the range, unreacted functional groups remain in the film, so that water resistance may become bad. If the acrylic resin proportion is lacking, the film becomes hard, so that physical properties such as shock resistance and the like may become bad and, if the proportion is too large, the film become soft and easy to be injured.

In a case where the coating of this invention is used as a coating for exterior decoration, the combining ratio of the above-described defined film-forming ingredient to the resin beads is, for example, in a range of 1/0.3 to 1/1.0. If the ratio exceeds the range, the coating becomes " dead matt " and its physical properties becomes inferior and, if it is lower than the range, the gloss-flatting may be very slight.

In a case where the coating of this invention is used as a coating for exterior decoration, an ultraviolet radiation absorbent used for the resin beads and film-forming ingredient is, for example, a benzotriazole type compound such as 2-( 2-hydroxy-3,5-di-tertiary-aminophenol )-2H-benzotriazole, 2- [ 2-hydroxy-3,5-di( 1,1-dimethylbenzyl ) phenyl] -2H-benzotriazole, 2-( 2'-hydroxy-5'-methylphenyl )-benzotriazole, 2-( 2-hydroxy-5-methylphenyl )-2H-benzotriazole and the like; a benzophenone type compound such as 2-hydroxy-4-dodecyloxybenzophenone and the like; a phenyloxalyl anilide type compound such as N-( 2-ethylphenol )-N-( 2-ethoxy-5-tertiary-butylphenyloxalyl anilide and the like; and a cyanophenylacrylate type compound such as ethyl 2-cyano-3,3-diphenylacrylate and the like. These compounds may be used alone or in combination of two or more kinds. Representative commercially available compounds of the benzotriazole type ultraviolet radiation absorbents are "Tinuvin 328" and "Tinuvin 900" ( trade names ) from Chiba Geigy Co., Ltd. and "See Sorb 701" and "See Sorb 704" ( trade names ) from Shipuro Kasei Co., Ltd. A representative commercially available compound of the benzophenone type ultraviolet radiation absorbents is "See Sorb 103" ( trade name ) from Shipuro Kasei Co., Ltd.

Although the ultraviolet radiation absorbent is in most cases used together with an antioxidant, it is similarly preferred that the absorbent in this invention is used together with an antioxidant. A preferable ratio for use of the antioxidant is, for example, in a range of 0.5 to 3.0 parts by weight similar to the case of an ultraviolet radiation absorbent. Preferable antioxidants are a hindered phenol type compound such as pentaerythrityl tetrakis [ 3-( 3,5-di-tertiary-butyl-4-hydroxyphenyl ) propionate ] , octadecyl-3-( 3,5-di-tertiary-butyl-4-hydroxyphenyl ) propionate and the like; a hindered amine type compound such as bis ( 1,2,2,6,6-pentamethyl-4-pyperidyl ) 2-( 3,5-tertiary-butyl-4-hydroxybenzyl )-2-normal-butylmalonate, bis( 1,2,2,6,6-pentamethyl-4-pyperidyl ) sebacate and the like; a sulfur-containing antioxidant such as pentaerythrityl tetrakis( $\beta$-laurylthiopropionate ) and the like. These compounds are used alone or in combination of two or more kinds. Representative commercially available compounds of the hindered phenol type antioxidant are "Irganox 1010" and "Irganox 1076" ( trade names ) from Chiba Geigy Co., Ltd. Representative commercially available compounds of the hindered amine type antioxidant are "Tinuvin 144" ( trade name ) from Chiba Geigy Co., Ltd. and "Sanol LS-440" and "Sanol LS-292" ( trade names ) from Sankyo Co., Ltd. A representative commercially available compound of the sulfur-containing antioxidant is "Seenox 412S" ( trade name ) from Shipuro Kasei Co., Ltd.

In a case where the coating of this invention is used as a coating for exterior decoration, the coating is carried out according to the 2 coat-1 bake or 2 coat-2 bake method similar to the usual case of making a clear layer.

Since thus-obtained coated articles of this invention have a transparent flatted clear layer at the uppermost layer, the brilliance of a brilliant pigment such as a metallic pigment in a lower layer becomes mysterious. Because of the large flop ( that is, for example, an optical anisotropy such as a visual feeling changing with variation of the incident light and receiving angle ), it is possible to express strongly uneven irregularities or three dimensional vision of bodies and to have sufficient durability as a paint film for automobiles which are exposed in severe natural conditions.

The coating of this invention is coated, after a coating for a base coat layer being coated, before or after baking and makes a film by drying at ordinary temperature or by drying under forced conditions. The drying under forced conditions may include baking and examples of its conditions are at 80°C or higher and for 20 minutes or longer.

In the coated articles of this invention, combination of a coating for the base coat ( for example, a metallic coating ) with a coating of this invention to be coated on the coating for the base coat is, for example, as follows.

( 1 ) Metallic coating --------a solvent type
( Example of resin : acrylic resin Example of curing agent : alkoxymethylolmelamine resin )
Coating of this invention --------a solvent type ( Example of resin : acrylic resin Example of curing agent : alkoxymethylolmelamine resin )
( 2 ) Metallic coating --------a water-soluble type
( Example of resin : acrylic resin Example of curing agent : alkoxymethylolmelamine resin )
Coating of this invention --------a solvent type
( Example of resin : acrylic resin Example of curing agent : isocyanate or block isocyanate )
( 3 ) Metallic coating --------a water-soluble type
( Example of resin : acrylic resin Example of curing agent : alkoxymethylolmelamine resin )
Coating of this invention --------a new solvent type
( Example of resin : acrylic resin Example of curing agent : acid anhydride or glycidyl compound )
( 4 ) Metallic coating --------a high nonvolatile content type
( Example of resin : acrylic resin Example of curing agent : alkoxymethylolmelamine resin )
Coating of this invention --------a high nonvolatile content type
( Example of resin : acrylic resin Example of curing agent : alkoxymethylolmelamine resin )
( 5 ) Metallic coating --------a water-soluble type
( Example of resin : acrylic resin Example of curing agent : alkoxymethylolmelamine resin )
Coating of this invention --------a water-soluble type
( Example of resin : acrylic resin Example of curing agent : alkoxymethylolmelamine resin )

As mentioned below, a paint film is made by a coating obtained by adding 10 to 150 parts by weight of resin beads to 100 parts by weight of a film-forming ingredient capable of making a clear layer, wherein the resin beads consist of particles of 11 to 70 $\mu$m in particle diameter and their refractive index $n_2$ with the refractive index $n_1$ of a clear layer made by the film-forming ingredient is satisfactory for the relation expressed by the above-described equation ①.

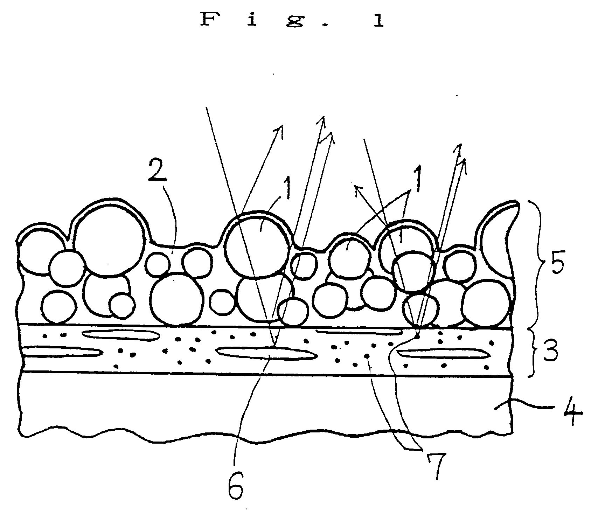

As seen in Fig. 1, the surface of the clear layer 2 shows fine uneven irregularities by the resin beads 1, and the refractive index of resin beads 1 is in the above-described specific relation with the refractive index of the clear layer 2. The incident light entering into the paint film 5 ( which is shown by a straight line running from an upper part in the figure's lengthwise direction toward a lower part ) undergoes partly diffuse reflection on fine uneven irregularities of the surface and the residual light proceeds through the clear layer 2 and resin beads 1. The proceeded light through them is reflected on the surface of the base coat layer 3 as well as on the pigment 7 and brilliant material 6 and then, it proceeds again through the clear layer 2 and resin beads 1 to go outside. Since people looking at the coated article recognize combined light of the diffuse reflection light with the light reflected on the base coat layer 3, the pigment and the brilliant material, the underlying metallic base color can be seen through a flatted clear layer having hitherto-unknown novel design performance and a transparent feeling.

Thus, an outside appearance similar to the original color ( a metallic base color ), flatted and having a brilliant feeling is obtained. In particular, when light is directed in the nighttime or when direct sunlight is directed, mild glitter appears. Any hitherto-known flat paint film does not appear such glitter.

If the resin beads have a functional group reactive with a film-forming ingredient and combine with the film-forming ingredient by reacting with the functional group, shock resistance of the film becomes large. In addition, if the resin beads and/or film-forming ingredient contain an ultraviolet radiation absorbent, a film superior in weather resistance is obtained. Such a film is very useful for exterior decoration of automobiles.

According to the present invention, a coating capable of making a paint film having a transparent feeling and being flatted is obtained. With this coating, novel design performance is given to an coated article.

Since the coated article of this invention has a paint film having a transparent feeling and being flatted on the uppermost layer of the paint film, it has a hitherto-unknown novel design performance.

BRIEF DESCRIPTION OF THE DRAWING

Fig. 1 is a partial cross-sectional view showing schematically one example of the flatted coated article of this invention.

DESCRIPTION OF THE PREFERRED EMBODIMENTS

The present invention is illustrated by the following examples of some preferred embodiments in comparison with comparative examples not according to the invention. Hereinafter, unless otherwise stated, the terms " parts " and " % " used herein are employed to mean " parts by weight " and " % by weight ", respectively. Also, the terms " flat and flatting " used herein are employed to mean not only that gloss of a paint film is dead absent but also that gloss of a paint film is diminished in comparison with a clear coating to which resin beads are not added.

A refractive index was measured as follows. The refractive index is directly determined by an Abbe refractometer using a free film. The refractive index of particles was determined by taking a solution of a known refractive index, dispersing particles in this solution, and measuring a difference between the known refractive index and a refractive index of the particle-dispersed solution by a differential refractometer. In the examples and comparative examples, particles having a refractive index within ± 0.1 % of a refractive index obtained from a film were combined.

Examples 1 to 6 and Comparative examples 1 to 5

Flat paints were prepared with formulation shown in Tables 1 and 2.

Table 1

| | | | example 1 | example 2 | example 3 | example 4 | example 5 | example 6 |
|---|---|---|---|---|---|---|---|---|
| formu-lation of flat paints | content (parts) and kind of contained ingredients | film-forming ingredient (clear layer-making ingre-dient) *1 | 45.11 | 36.91 | 58.00 | 45.11 | 45.11 | 45.11 |
| | | resin beads | 36.09 *2 | 44.29 *2 | 23.20 *2 | 36.09 *3 | 36.09 *4 | 36.09 *5 |
| | | solvent *6 | 18.80 | 11.80 | 11.80 | 18.80 | 18.80 | 18.80 |
| | particle diameter range of resin beads ($\mu$m) | | 11 to 32 | 11 to 32 | 11 to 32 | 11 to 64 | 11 to 24 | 11 to 48 |
| | refractive index | clear layer | 1.50 | 1.50 | 1.50 | 1.50 | 1.50 | 1.50 |
| | | resin beads | 1.50 | 1.50 | 1.50 | 1.50 | 1.53 | 1.53 |

*1: Sp0-28L clear (trade name of top coat clear for automobiles, made by Nippon Paint Co., Ltd., resin solid portion 41 %)

*2: Acrylic resin beads A (trade name of resin beads made by Nippon Paint Co., Ltd.)

*3: Acrylic resin beads B (trade name of resin beads made by Nippon Paint Co., Ltd.)

*4: RUBCOULEUR 230M (resin beads made by Dainichiseika Color & Chemicals MFg. Co., Ltd., from which particles having diameters smaller than 11 $\mu$m were eliminated.)

*5: RUBCOULEUR 230F (resin beads made by Dainichiseika Color & Chemicals MFg. Co., Ltd., from which particles having diameters smaller than 11 $\mu$m were eliminated.)

*6: Solvesso 100 (trade name of petroleum naphtha made by Exxon Chemicals Co., Ltd.)

EP 0 522 454 A1

Table 2

| formulation of flat paints | | | compara-tive example 1 | compara-tive example 2 | compara-tive example 3 | compara-tive example 4 | compara-tive example 5 |
|---|---|---|---|---|---|---|---|
| content (parts) and kind of contained ingredients | film-forming ingredient (clear layer-making ingredient) *1 | | 30.28 | 88.92 | 45.11 | 45.11 | 64.44 |
| | resin beads | | 48.45 *2 | 7.11 *2 | 36.09 *3 | 36.09 *4 | 12.90 *5 |
| | solvent *6 | | 21.27 | 3.97 | 18.80 | 18.80 | 22.66 |
| particle diameter range of resin beads (μm) | | | 11 to 32 | 11 to 32 | 11 to 32 | 11 to 24 | 1 to 12 |
| refractive index | clear layer | | 1.50 | 1.50 | 1.50 | 1.50 | 1.50 |
| | resin beads | | 1.50 | 1.50 | 1.42 | 1.59 | 1.44 |

*1: Sp0-28L clear (trade name of top coat clear for automobiles, made by Nippon Paint Co., Ltd., resin solid portion 41 %)
*2: Acrylic resin beads A (trade name of resin beads made by Nippon Paint Co., Ltd.)
*3: Tos pearl 3120 (resin beads made by Toshiba Silicone Co., Ltd., from which particles having diameters smaller than 11 μm were eliminated.)
*4: TECPOLYMER SBX50 (resin beads made by Sekisui Kaseihin Kogyo Co., Ltd., from which particles having diameters smaller than 11 μm were eliminated.)
*5: SYLOID 244 (trade name of synthetic silica made by Fuji-Davison Chemical Ltd.)
*6: Solvesso 100 (trade name of petroleum naphtha made by Exxon Chemicals Co., Ltd.)

Example 7

A cold-finished steel sheet ( 500 mm length, 300 mm width, and 0.8 mm thickness ) was used as an article to be coated. This sheet was pretreated by a zinc-phosphating agent (SURFDINE SD 5000, made by Nippon Paint Co., Ltd. ) according to an usual method, then it was subjected to electrodeposition using a cationic electrodeposition coating ( Power Top U-30, made by Nippon Paint Co., Ltd. which is an epoxyurethane-cationic resin type coating ), and heated at 160°C for 0.5 hours to make a electrodeposition paint film of 20 μm in dried film thickness. Then, an intermediate coat ( Orga P-2 grey, made by Nippon Paint Co., Ltd. which is a polyester-melamine resin type coating ) was coated according to an usual method and heated at 140 °C for 0.5 hours to make an intermediate film of 35 μm in dried film thickness. On this, the coating A for base coat having the undermentioned formulation and the flat paint ( for top coat ) of example 1 was coated by wet-on-wet and baked at 140 °C for 0.5 hours, whereby a metallic paint film and, thereon, a flat paint film were made and a flatted coated article was obtained.

| Formulation of coating A for base coat | |
|---|---|
| ALPASTE 7160N ( aluminum flake content 65 % ) | 10.9 parts |
| ( "ALPASTE" is a trade name of aluminum flake paste made by Toyo Aluminum Co., Ltd. ) | |
| ALMATEX NT-U-448 ( solid portion 48 % ) | 66.85 parts |
| ( "ALMATEX" is a trade name of thermosetting acrylic resin varnish made by Mitsui Toatsu Chemicals Inc. ) | |
| UVAN 20N-60 ( solid portion 60 % ) | 13.37 parts |
| ( "UVAN" is a trade name of melamine resin varnish made by Mitsui Toatsu Chemicals Inc. ) | |
| toluene<br>n-butanol<br>triethylamine<br>Total | 6.38 parts<br>2.0 parts<br>0.5 parts<br>100.0 parts |

Comparative example 6

The procedure of example 7 was repeated to make a metallic paint film and thereon a clear film, except that a commercially available clear coating [ Superlac 0-28L (trade name), made by Nippon Paint Co., Ltd.] was used instead of the flat paint in the example 1, whereby a metallic coated article was obtained.

Examples 8 to 12 and comparative examples 7 to 11

The procedure of example 7 was repeated to make a metallic paint film and thereon a flat paint film, except that the flat paints shown in Tables 3 and 5 were used instead of the flat paint in the example 1, whereby a flatted coated article was obtained.

Examples 13 to 21

The procedure of example 7 was repeated to make a metallic paint film and thereon a flat paint film, except that the coatings for base coat shown in Tables 3 and 4 were used instead of the coating for base coat A, whereby a flatted coated article was obtained.

The coatings for base coat B to J used in the examples 13 to 21 are made according to the following.

| Formulation of coating B for base coat | |
|---|---|
| LG R gold # 100 | 7.37 parts |
| ( "LG R gold # 100" is a trade name of colored aluminum flakes ( particle diameter 150 $\mu$m ), made by Oike Kogyo Co., Ltd. ) | |
| ALMATEX NT-U-448 ( solid portion 48 % )<br>UVAN 20N-60 ( solid portion 60 % )<br>toluene<br>n-butanol<br>triethylamine<br>Total | 69.50 parts<br>13.90 parts<br>6.63 parts<br>2.08 parts<br>0.52 parts<br>100.0 parts |

11

| Formulation of coating C for base coat | |
|---|---|
| Metashine silver RCFSX-2015PS | 7.37 parts |
| ( "Metashine silver" is a trade name of glass flakes, made by Nippon Sheet Glass Co., Ltd. ) | |
| ALMATEX NT-U-448 ( solid portion 48 % )<br>UVAN 20N-60 ( solid portion 60 % )<br>toluene<br>n-butanol<br>triethylamine<br>Total | 69.50 parts<br>13.90 parts<br>6.63 parts<br>2.08 parts<br>0.52 parts<br>100.0 parts |

| Formulation of coating D for base coat | |
|---|---|
| Iriodin 101WII | 7.37 parts |
| ( "Iriodin" is a trade name of mica flakes, made by Merck Japan Ltd. ) | |
| ALMATEX NT-U-448 ( solid portion 48 % )<br>UVAN 20N-60 ( solid portion 60 % )<br>toluene<br>n-butanol<br>triethylamine<br>Total | 69.50 parts<br>13.90 parts<br>6.63 parts<br>2.08 parts<br>0.52 parts<br>100.0 parts |

| Formulation of coating E for base coat | |
|---|---|
| Iriodin 225WII<br>ALMATEX NT-U-448 ( solid portion 48 % )<br>UVAN 20N-60 ( solid portion 60 % )<br>toluene<br>n-butanol<br>triethylamine<br>Total | 7.37 parts<br>69.50 parts<br>13.90 parts<br>6.63 parts<br>2.08 parts<br>0.52 parts<br>100.0 parts |

| Formulation of coating F for base coat | |
|---|---|
| Iriodin 504WII<br>ALMATEX NT-U-448 ( solid portion 48 % )<br>UVAN 20N-60 ( solid portion 60 % )<br>toluene<br>n-butanol<br>triethylamine<br>Total | 7.37 parts<br>69.50 parts<br>13.90 parts<br>6.63 parts<br>2.08 parts<br>0.52 parts<br>100.0 parts |

| Formulation of coating G for base coat | |
|---|---|
| Bright 50NM20 | 7.37 parts |
| ( "Bright 50NM20" is a trade name of mica flakes made by Nippon Chemical Industry Co., Ltd. ) | |
| ALMATEX NT-U-448 ( solid portion 48 % )<br>UVAN 20N-60 ( solid portion 60 % )<br>toluene<br>n-butanol<br>triethylamine<br>Total | 69.50 parts<br>13.90 parts<br>6.63 parts<br>2.08 parts<br>0.52 parts<br>100.0 parts |

| Formulation of coating H for base coat | |
|---|---|
| Paliocrom blue gold FA4071 | 7.37 parts |
| ( "Paliocrom blue gold" is a trade name of phthalocyanine flakes made by BASF Lacke + Farben AG. ) | |
| ALMATEX NT-U-448 ( solid portion 48 % )<br>UVAN 20N-60 ( solid portion 60 % )<br>toluene<br>n-butanol<br>triethylamine<br>Total | 69.50 parts<br>13.90 parts<br>6.63 parts<br>2.08 parts<br>0.52 parts<br>100.0 parts |

| Formulation of coating I for base coat | |
|---|---|
| F. O. R. | 7.37 parts |
| [ "F. O. R." is a trade name of MIO ( an abbreviation of micaceous iron oxide ), made by Dainichiseika Color & Chemicals MFg. Co., Ltd. ] | |
| ALMATEX NT-U-448 ( solid portion 48 % )<br>UVAN 20N-60 ( solid portion 60 % )<br>toluene<br>n-butanol<br>triethylamine<br>Total | 69.50 parts<br>13.90 parts<br>6.63 parts<br>2.08 parts<br>0.52 parts<br>100.0 parts |

| Formulation of coating J for base coat | |
|---|---|
| Coating A for base coat<br>Superlac M-91 for color-adjusting<br>Total | 50.0 parts<br>50.0 parts<br>100.0 parts |

Tables 3 to 5 show the kinds of flat paints used in the examples 7 to 21 and comparative examples 6 to 11 as well as properties of the flat paint films ( transparence, flatting effect, 60°C gloss, adhesion, warm water resistance and chemicals resistance ) examined according to the following.

The transparence was examined by observing the color of base coat film and the exterior appearance of metallic feeling through the flat paint film by the naked eye and evaluated according to the following standard.

◎ :  the substrate color and metallic feeling are well seen through.

○ :  the substrate color and metallic feeling are seen through.

△ :  the substrate color is seen, but the metallic feeling is somewhat weak.

X :  the substrate color is somewhat cloudy white and the metallic feeling is weak.

ＸＸ：    the substrate color is too cloudy white to see, and the metallic feeling is absent.

The flatting effect was examined by observing the flatted condition of a flat paint film surface by the naked eye and evaluated according to the following standard.

◎ :    the flatting effect is large.

○ :    the flatting effect is somewhat large.

△ :    the flatting effect is medium.

Ｘ :    the flatting effect is small.

ＸＸ：    the flatting effect is absent.

The 60 °C gloss was examined by a digital variable gloss meter ( a UGV-5K model, made by Suga Test Instrument Co., Ltd. ) and evaluated according to the following standard.

success :    the 60 °C gloss is 30 or less.

failure :    the 60 °C gloss is more than 30.

The adhesion was examined by the number of remaining pieces according to Japanese Industrial Standard ( JIS ) K-5400-6.15, and evaluated according to the following standard.

success :    100/100

The warm water resistance was examined by immersing a test sample in warm water of 40°C for 10 days followed by observing the paint film appearance by the naked eye, and evaluated according to the following standard.

○ :    discoloration and blister do not exist.

Ｘ :    discoloration or blister exists.

The chemicals resistance was examined by immersing a test sample in a 0.1 N aqueous sulfuric acid at 20°C for 24 hours followed by observing the paint film appearance by the naked eye, and evaluated according to the following standard.

○ :    discoloration and blister do not exist.

Ｘ :    discoloration or blister exists.

Table 3

| | | example 7 | example 8 | example 9 | example 10 | example 11 | example 12 | example 13 | example 14 |
|---|---|---|---|---|---|---|---|---|---|
| No. of flat paints | | example 1 | example 2 | example 3 | example 4 | example 5 | example 6 | example 1 | example 1 |
| Mark of coatings for base coat | | A | A | A | A | A | A | B | C |
| properties of flat paints | transparence | ○ | ○ | ○ | ○ | ○ | ○ | ○ | ○ |
| | flatting effect | ○ | ○ | ○ | ○ | ○ | ○ | ○ | ○ |
| | 60° gloss | 10 (success) | 7 (success) | 18 (success) | 9 (success) | 10 (success) | 11 (success) | 13 (success) | 9 (success) |
| | adhesion (checkerboard square-peeling test) | $\frac{100}{100}$ | $\frac{100}{100}$ | $\frac{100}{100}$ | $\frac{100}{100}$ | $\frac{100}{100}$ | $\frac{100}{100}$ | $\frac{100}{100}$ | $\frac{100}{100}$ |
| | warm water resistance | ○ | ○ | ○ | ○ | ○ | ○ | ○ | ○ |
| | chemicals resistance | ○ | ○ | ○ | ○ | ○ | ○ | ○ | ○ |

Table 4

| | | example 15 | example 16 | example 17 | example 18 | example 19 | example 20 | example 21 |
|---|---|---|---|---|---|---|---|---|
| No. of flat paints | | example 15 | example 16 | example 17 | example 18 | example 19 | example 20 | example 21 |
| Mark of coatings for base coat | | example 1 | example 1 | example 1 | example 1 | example 1 | example 1 | example 1 |
| | | D | E | F | G | H | I | J |
| properties of flat paints | transparence | ○ | ○ | ○ | ○ | ○ | ○ | ○ |
| | flatting effect | ○ | ○ | ○ | ○ | ○ | ○ | ○ |
| | 60° gloss | 12 (suc-cess) | 12 (suc-cess) | 11 (suc-cess) | 11 (suc-cess) | 9 (suc-cess) | 11 (suc-cess) | 10 (suc-cess) |
| | adhesion (checkerboard square-peeling test) | $\frac{100}{100}$ | $\frac{100}{100}$ | $\frac{100}{100}$ | $\frac{100}{100}$ | $\frac{100}{100}$ | $\frac{100}{100}$ | $\frac{100}{100}$ |
| | warm water resistance | ○ | ○ | ○ | ○ | ○ | ○ | ○ |
| | chemicals resistance | ○ | ○ | ○ | ○ | ○ | ○ | ○ |

Table 5

| | | comparative example 6 | comparative example 7 | comparative example 8 | comparative example 9 | comparative example 10 | comparative example 11 |
|---|---|---|---|---|---|---|---|
| No. of flat paints | | *1 | comparative example 1 | comparative example 2 | comparative example 3 | comparative example 4 | comparative example 5 |
| Mark of coatings for base coat | | A | A | A | A | A | A |
| properties of flat paints | transparence | ◎ | △ | ○ | × | △ | △ |
| | flatting effect | ×× | ○ | △ | ○ | ○ | ◎ |
| | 60° gloss | 93 (—) | 5 (success) | 35 (failure) | 11 (success) | 9 (success) | 4 (success) |
| | adhesion (checkerboard square-peeling test) | 100/100 | 20/100 | 100/100 | 100/100 | 100/100 | 50/100 |
| | warm water resistance | ○ | × | ○ | × | ○ | ○ |
| | chemicals resistance | ○ | ○ | ○ | ○ | ○ | ○ |

*1: SpO-28L clear (trade name of top coat clear for automobiles, made by Nippon Paint Co., Ltd., resin solid portion 41 %)

As seen in Tables 3 to 5, each of the coatings in the examples of this invention contains 100 parts of a film-forming ingredient capable of making a clear layer and 40 to 120 parts of resin beads consisting of particles of 11 to 70 $\mu$m in particle diameter, shows 0.05 or less in the refractive index difference between the clear layer and the resin beads, and made paint films which show design performance having a flat and clear transparent feeling. The paint films have no problem in adhesion, warm water resistance and chemicals resistance.

Manufacture example 1 of resin beads

Into a mixture solution of 20 parts of ethylene glycol dimethacrylate, 10 parts of styrene, 10 parts of 2-ethylhexyl methacylate, 38 parts of lauryl methacrylate, 22 parts of Placcel FM 1 ( a trade name of Daicel kagaku kogyo Co., Ltd. ), 1 part of Sanol LS 292 ( a trade name of Sankyo Co., Ltd. ), and 2 parts of Tinuvin 900 ( a trade name of Chiba Geigy Co., Ltd. ) was dissolved 1 part of lauroyl peroxide and, to this obtained mixture was added with stirring a solution prepared by dissolving 1 part of Gosenol GH-17 ( a trade name of a polyvinyl alcohol product of Nippon Synthetic Chemical Industry ) in 550 parts of deionized water, and the here-obtained mixture was stirred with a rotating number of 3500 rpm by a homomicline flow 30 model ( dispersing machine made by Tokushu Kika Kogyo Co., Ltd. ) to obtain a suspension solution.

This suspension solution was placed in a reaction vessel equipped with a stirrer, cooler, temperature-controlling device and nitrogen-introducing tube and a polymerization reaction was performed at 80 °C for 5 hours with stirring.

A nonvolatile portion of the obtained dispersed solution was 15.2 % and this portion was taken by filtration and dried to obtain the resin beads ( 1 ), which were powder of crosslinked acrylic resin particles having a center of average particle diameters at 30 $\mu$m and the particle diameters in a range of from 15 to 60 $\mu$m.

Comparative manufacture example 1 of resin beads

The procedure of manufacture example 1 of resin beads was repeated except that Sanol LS 292 and Tinuvin 900 were not used, whereby there was obtained the comparative resin beads ( 2 ), powder of crosslinked acrylic resin particles.

Comparative manufacture example 2 of resin beads

The procedure of manufacture example 1 of resin beads was repeated except that Placcel FM 1 was not used, whereby there was obtained the comparative resin beads ( 3 ), powder of crosslinked acrylic resin particles.

The material formulation of crosslinked acrylic resin particle powder obtained from the above manufacture examples and comparative manufacture examples, the central value of average particle diameters, the range of particle diameters, and the kind and content of functional groups are shown in Table 6.

Table 6

| | | manufacture example 1 | comparative manufacture example 1 | comparative manufacture example 2 |
|---|---|---|---|---|
| No. of resin beads | | resin bead (1) | comparative resin bead (2) | comparative resin bead (3) |
| formulation of materials (parts) | ethylene glycol dimethacrylate | 20 | 20 | 20 |
| | styrene | 10 | 10 | 10 |
| | 2-ethylhexyl methacrylate | 10 | 10 | 10 |
| | lauryl methacrylate | 38 | 38 | 38 |
| | Placcel FM1 | 22 | 22 | - |
| | Sanol LS 292 | 1 | - | 1 |
| | Tinuvin 900 | 2 | - | 2 |
| Properties | center value of average particle diameters ($\mu$m) | 30 | 30 | 30 |
| | range of particle diameters ($\mu$m) | 15 to 60 | 15 to 60 | 15 to 60 |
| | proportion of OH group content (mmol/cc) | 0.9 | 0.9 | 0 |

Manufacture example 1 of film-forming ingredient

An acrylic resin used for a flat paint was prepared as follows. Using a polymerization reaction vessel equipped with a reaction bath, stirrer, monomer-dropping bath, and heating-cooling device, a polymerization reaction was carried out with the following material formulation in a 1 : 1 mixed solution of xylene and Solvesso 100 ( a trade name of petroleum naphtha made by Exxon Chemicals Co., Ltd.) to obtain acrylic resin varnish having 50 % of a nonvolatile portion.

18

| Material formulation | |
|---|---|
| styrene | 21.5 parts |
| butyl methacrylate | 40 parts |
| acrylic acid | 1.5 parts |
| 2-ethylhexyl methacrylate | 5 parts |
| ethylhexyl acrylate | 10 parts |
| 2-hydroxyethyl methacrylate | 22 parts |
| 2,2'-azobis(isobutyronitrile) | 1.3 parts |

The acrylic resin in this acrylic resin varnish had a weight average molecular weight of 14,000, an acid value of 12 mg-KOH per gram, and an OH value of 95 mg-KOH per gram.

Manufacture example 2 of film-forming ingredient

Acrylic polyol resin varnish using for a flat paint was prepared as follows.

Using a polymerization reaction vessel equipped with a reaction bath, stirrer, monomer-dropping bath, and heating-cooling device, a polymerization reaction was carried out with the following material formulation in a 1 : 1 mixed solution of xylene and Solvesso 100 ( a trade name of petroleum naphtha made by Exxon Chemicals Co., Ltd.) to obtain acrylic polyol resin varnish having 50 % of a nonvolatile portion.

| Material formulation | |
|---|---|
| methyl methacrylate | 22.5 parts |
| styrene | 10 parts |
| isobutyl methacrylate | 33 parts |
| n-butyl methacrylate | 18 parts |
| 2-hydroxyethyl methacrylate | 16 parts |
| methacrylic acid | 0.5 parts |

The acrylic polyol resin in this acrylic polyol resin varnish had a weight average molecular weight of 8,000, an acid value of 3 mg-KOH per gram, and an OH value of 70 mg-KOH per gram.

Example 22 and comparative examples 12 and 13

Using the resin beads ( 1 ), comparative resin beads ( 2 ) and ( 3 ) prepared as described above and acrylic resin varnish, a flat paint for exterior decoration was prepared by the undermentioned formulation. At first, 38 parts of acrylic resin varnish was weighted into a vessel. To the varnish under 1500 rpm stirring by a disper ( a dispersion device ) were gradually added 22 parts of the resin beads and, after adding the whole amount, the stirring was continued for 30 minutes. To the contents in the vessel was added with stirring 16 parts of n-butanol-modified butylated melamine resin varnish. Then, 1 part of an ultraviolet radiation absorbent, 0.5 parts of an antioxidant and 0.05 parts of a surface-conditioner were charged in this order in the vessel, and the obtained mixture was stirred for 30 minutes. Then, a 1 : 1 mixed solvent of xylene and Solvesso 100 was added to adjust viscosity.

| Formulation of flat paint | |
|---|---|
| acrylic resin varnish ( nonvolatile portion 50 % ) | 38 parts |
| resin beads or comparative resin beads | 22 parts |
| n-butanol-modified butylated melamine resin varnish ( nonvolatile portion 60 % ) ( UVAN 20 SE, a trade name of Mitsui Toatsu Chemicals Inc. ) | 16 parts |
| benzotriazole type ultraviolet radiation absorbent (Tinuvin 900, a trade name of Chiba Geigy Co., Ltd. ) | 1 parts |
| hindered amine type antioxidant (Sanol LS 292, a trade name of Sankyo Co., Ltd. ) | 0.5 parts |
| acrylic-based surface-conditioner ( Modaflow, a trade name of Monsanto Co., Ltd. ) | 0.05 parts |
| petroleum naphtha solvent ( Solvesso 100, a trade name of Exxon Chemicals Co., Ltd.) | 10 parts |
| total | 87.55 parts |

Example 23

The procedure of 22 was repeated to make a flat paint, except that the urethane resin varnish prepared as described above was used instead of the acrylic resin varnish.

Example 24 and comparative examples 14 and 15

A cold-finished steel sheet ( 500 mm length, 300 mm width, and 0.8 mm thickness ) was used as an article to be coated. This sheet was pretreated by a zinc-phosphating agent (SURFDINE SD 5000, made by Nippon Paint Co., Ltd. ) according to an usual method, then it was subjected to electrodeposition with a cationic electrodeposition coating ( Power Top U-30, made by Nippon Paint Co., Ltd. which is an epoxyurethane-cationic resin type coating ), and heated at 160 °C for 0.5 hours to make a electrodeposition paint film of 20 $\mu$m in dried film thickness. Then, an intermediate coat ( Orga P-2 grey, made by Nippon Paint Co., Ltd. which is a polyester-melamine resin type coating ) was coated according to an usual method and heated at 140 °C for 0.5 hours to make an intermediate paint film of 35 $\mu$m in dried film thickness. On this, the coating A for base coat of the above-described formulation and the flat paints of the example 22 and comparative examples 12 and 13 were, respectively, coated by wet-on-wet and baked at 140°C for 0.5 hours, whereby a metallic paint film and thereon, a flat paint film were made and thereby, a flatted coated article was obtained. The metallic paint film had dried film thickness of 15 ± 3 $\mu$m and the flat paint film had dried film thickness in a range of 25 to 30 $\mu$m.

Example 25

A polyester resin having an amphoteric ionic group was prepared. Into a 2 liter reaction flask equipped with a stirrer, nitrogen gas-introducing tube, temperature-controlling device, condenser, and decanter were placed 134 parts of bis(hydroxyethyl)taurine, 130 parts of neopentyl glycol, 236 parts of azelaic acid, 186 parts of phthalic anhydride and 27 parts of xylene, and the mixture was warmed. Water formed by a reaction was removed by azeotropic distillation with xylene.

The temperature was raised to 190°C during 2 hours from the beginning of refluxing, and stirring and dehydrating were continued until the acid value corresponding with the carboxylic acids becomes 145, and the reaction mixture was cooled to 140 °C. Then, to the mixture was added dropwise 314 parts of "Cardula E10 " ( versatic acid glycidyl ester, made by Shell Oil Co., Ltd. ) during 30 minutes while maintaining the mixture at 140 °C, and the reaction was finished after stirring being continued for further 2 hours. The obtained polyester resin had an acid value of 59, an OH value of 90 and weight average molecular weight of 1054.

Next, using the obtained polyester resin, resin particles were prepared.

Into a 1 liter reaction vessel equipped with a stirrer, cooler and temperature-controlling device were placed 282 parts of deionized water, 10 parts of the above-prepared polyester resin and 0.75 parts of dimethylethanolamine, and a mixture solution was made by dissolving those with stirring while maintaining temperature at 80 °C. Then, to this solution was added a solution made by dissolving 4.5 parts of azobis (cyanovaleric acid) into a mixture of 45 parts of deionized water and 4.3 parts of di methylethanolamine.

Furthermore, to the obtained mixture was added dropwise during 60 minutes a mixed solution consisting of 70.7 parts of methyl methacrylate, 94.2 parts of n-butyl acrylate, 70.7 parts of styrene, 30 parts of 2-hydroxyethyl acrylate and 4.5 parts of ethylene glycol dimethacrylate and, after this adding, a mixture made by dissolving 1.5 parts of azobis (cyanovaleric acid) into 15 parts of deionized water and 1.4 parts of di methylethanolamine was further added, and the obtained mixture was stirred at 80 °C for 60 minutes to get an emulsion having 45 % of a nonvolatile portion, 0.156 $\mu$m in an average particle diameter, 92 cP in viscosity (at 25°C ) and 7.2 in pH. This emulsion was subjected to spray drying to remove water and, to the emulsion, xylene was added in a ratio of 50 parts to 100 parts of resin particles in order to disperse particles again, whereby a solution of resin particles dispersed in xylene was prepared. The average particle diameter of these dispersed particles was 0.3 $\mu$m.

A coating for base coat of a high nonvolatile portion type ( the solid portion was 53 % ) was prepared by mixing 100 parts of the forementioned coating A for base coat and 30 parts of the here-obtained xylene solution in which the resin particles were dispersed. The viscosity of this coating was 14 to 15 seconds by a No. 4 Ford Cup.

The procedure of example 24 was repeated to obtain a flatted coated article, except that the here-obtained coating for base coat was used instead of the coating A for base coat and the interval of wet-on-wet was 3 minutes at room temperature.

Example 26

Into a 1 liter reaction vessel equipped with a stirrer, temperature-controlling device and cooler was placed 76 parts of ethylene glycol monobutyl ether. On the other hand, a monomer solution consisting of 45 parts of styrene, 63 parts of methyl methacrylate, 48 parts of 2-hydroxyethyl methacrylate, 117 parts of n-butyl acrylate, 27 parts of methacrylate, 3 parts of 1-dodecanethiol ( lauryl mercaptane ) and 3 parts of azobis ( isobutyronitrile ) was prepared and 61 parts of this solution was added into the ethylene glycol monobutyl ether in the reaction vessel and the obtained mixture was warmed up to 120 °C with stirring. To this warmed mixture was added dropwise during 3 hours 245 parts of the above-prepared monomer solution, and the obtained mixture was further stirred for 1 hour. With still further adding 28 parts of dimethylethanolamine and 200 parts of deionized water, there was obtained acrylic resin varnish having 50 % of a volatile portion and 6,000 in a number average molecular weight of the resin. Properties of this resin was 70 in the OH value, 58 in the acid value and 11.3 in the Sp value.

With 140 parts of the thus-obtained acrylic resin varnish was mixed under stirring 30 parts of methoxylated methylolmelamine ( "Cymel 303" which is a trade name of Mitsui Toatsu Chemicals Inc. ), 20 parts of the xylene solution of the example 25 in which resin particles were dispersed, and 15 parts of an aluminum pigment ( "ALPASTE 60-760 ", made by Toyo Aluminum Co., Ltd. ). The obtained mixture was diluted by deionized water until viscosity becomes 25 to 30 seconds ( viscosity by a No. 4 Ford cup at 20 °C ), whereby a metallic coating was obtained.

The procedure of example 24 was repeated to obtain a flatted coated article, except that the obtained metallic coating was used instead of the A and preheating at 80°C for 5 minutes was carried out at an interval of the wet-on-wet.

Example 27

The procedure of example 24 was repeated except that the flat paint of example 23 was used for coating, whereby a flatted coated article was obtained.

For the flatted coated articles obtained from the examples 24 to 27 and comparative examples 14 and 15, surface condition and outside appearance of paint films, shock resistance and weather resistance were examined and the results are shown in Table 7.

The surface condition and outside appearance were evaluated by whether abnormality such as bittiness or the like exists on the surface at the 60 ° gloss 7 to 15, and by whether a suede type outside appearance is shown or not; (○) for success and ( X ) for failure.

A success in the shock resistance was given in the case where, according to JIS ( Japanese Industrial Standard ) K-5400-8.3.2, the surface was shocked by a Du Pont type shock testing machine and none of cracking and peeling was observed. The surface shocking was performed by putting a striker of 0.5 inch in radius on an upward-turned paint film face followed by dropping down a 500 g weight from a 20 cm height onto the striker.

A success in the weather resistance was given in the case where, according to JIS K-5400-9.8.1, a test by a sunshine weatheometer ( W-O-M ) was performed for 2,000 hours and the results showed $\triangle$ E < 3.0

and $\triangle G > 80$.

Table 7

| | example 24 | example 25 | example 26 | comparative example 14 | comparative example 15 | example 27 |
|---|---|---|---|---|---|---|
| No. of flat paints | example 22 | example 22 | example 22 | comparative example 12 | comparative example 13 | example 23 |
| No. of resin beads | (1) | (1) | (1) | (2) | (3) | (1) |
| kind of coating for base coat | A | high non-volatile portion type | water-soluble type | A | A | A |
| surface condition and outside appearance of paint films | O | O | O | O | O | O |
| shock resistance | 25 | 25 | 25 | 25 | 10 | 25 |
| weather resistance △E | 0.7 | 1.0 | 0.8 | 3.5 | 1.1 | 0.8 |
| weather resistance △G | 85 | 90 | 86 | 70 | 85 | 90 |

As seen in Table 7, the paint films in the examples are flatted properly, show the suede type outside appearance, and are superior in the shock resistance and weather resistance. In contrast, the paint film of comparative example 14 is inferior in the weather resistance and that of comparative example 15 is inferior in the shock resistance.

## Claims

1. A method for flatting a coating by adding 10 to 150 parts by weight of resin beads to 100 parts by weight of a film-forming ingredient capable of making a clear layer, wherein the resin beads consist of particles having particle diameters in a range of 11 to 70 $\mu$m and, their refractive index $n_2$ with the refractive index $n_1$ of a clear layer made by the film-forming ingredient is satisfactory for a relation expressed by the following equation ①:

   $$0 \leq | n_1 - n_2 | \leq 0.05 \quad ①$$

2. A coating made by adding 10 to 150 parts by weight of resin beads to 100 parts by weight of a film-forming ingredient capable of making a clear layer, wherein the resin beads consist of particles having particle diameters in a range of 11 to 70 $\mu$m and, their refractive index $n_2$ with the refractive index $n_1$ of

a clear layer made by the film-forming ingredient is satisfactory for a relation expressed by the following equation ①:

$$0 \leq |\, n_1 - n_2 \,| \leq 0.05 \qquad ①$$

3. A coating according to Claim 2, containing an ultraviolet radiation absorbent.

4. A coating according to Claim 3, wherein the resin beads contain an ultraviolet radiation absorbent.

5. A coating according to Claim 3 or 4, wherein the resin beads have a functional group capable of reacting with a film-forming ingredient.

6. A coated article, wherein the uppermost layer of a paint film made on an article to be coated is a clear layer having uneven irregularities on the surface by containing resin beads consisting of particles of 11 to 70 $\mu$m in particle diameter and, the refractive index $n_1$ of the clear layer and the refractive index $n_2$ of the resin beads are satisfactory for a relation expressed by the following equation ①:

$$0 \leq |\, n_1 - n_2 \,| \leq 0.05 \qquad ①$$

7. A coated article according to Claim 6, containing an ultraviolet radiation absorbent.

8. A coated article according to Claim 7, wherein the resin beads contain an ultraviolet radiation absorbent.

9. A coated article according to Claim 7 or 8, wherein the resin beads have been allowed to react with a film-forming ingredient.

F i g .  1

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 259 181 (NIPPON PAINT CO.) <br> * page 2, line 56 - line 62 * <br> * page 3, line 60 - line 63; claims 1,5,9,10 * | 1-9 | C09D7/00 |
| Y | US-A-3 943 080 (WISMER M. ;ET AL) <br> * claim 1 * | 1-9 | |
| A | US-A-4 684 675 (COLLIER C. P.) <br> * claims 1-4; example 2 * | 1-3,6,7 | |
| A | US-A-4 124 548 (GILLAN J. ;ET AL) <br> * CLAIMS* | 1-9 | |

|  |  |
|---|---|
| | TECHNICAL FIELDS SEARCHED (Int. Cl.5) |
| | C09D |

The present search report has been drawn up for all claims

| Place of search | Date of completion of the search | Examiner |
|---|---|---|
| THE HAGUE | 05 NOVEMBER 1992 | CATURLA VICENTE V. |